(19) Europäisches Patentamt
European Patent Office
Office européen des brevets

(11) **EP 4 498 287 A1**

(12) **EUROPEAN PATENT APPLICATION**

(43) Date of publication:
**29.01.2025 Bulletin 2025/05**

(51) International Patent Classification (IPC):
**G06N 3/09** (2023.01)  **G06N 3/0475** (2023.01)
**G06N 3/0455** (2023.01)  **G06N 3/094** (2023.01)
**G06N 3/045** (2023.01)

(21) Application number: **24165376.5**

(22) Date of filing: **22.03.2024**

(52) Cooperative Patent Classification (CPC):
**G06N 3/045; G06N 3/0455; G06N 3/0475;
G06N 3/09; G06N 3/094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023 CN 202310916778**

(71) Applicant: **Delta Electronics, Inc.
Taoyuan City 33341 (TW)**

(72) Inventors:
• **TING, Ning
  Taoyuan City (TW)**
• **LIN, Che-Kuang
  Taoyuan City (TW)**

(74) Representative: **2K Patentanwälte Blasberg
Kewitz & Reichel
Partnerschaft mbB
Schumannstrasse 27
60325 Frankfurt am Main (DE)**

(54) **GENERATIVE ADVERSARIAL NETWORKS-BASED METHOD FOR COMPONENT ANOMALY DETECTION AND DEVICE THEREOF**

(57) A generative adversarial networks-based method for component anomaly detection is provided. The method includes deriving a first abnormal score of input data by a denoising auto-encoder, deriving a second abnormal score of the input data by a discriminator, and adding the first abnormal score the second abnormal score to calculate an abnormal degree of the input data, wherein the step of deriving the first abnormal score of input data by the denoising auto-encoder includes extracting a manifold coordinate of the input data, and calculating a distance between the manifold coordinate and an average coordinate of normal data as the first abnormal score.

FIG. 5

**Description**

CROSS REFERENCE TO RELATED APPLICATIONS

This application claims priority of China Patent Application No. 202310916778.6, filed on July 25, 2023, the entirety of which is incorporated by reference herein.

BACKGROUND OF THE DISCLOSURE

Field of the Disclosure

The disclosure relates to a method and a device for component anomaly detection, and in particular, to a generative adversarial networks-based method and device for component anomaly detection.

Description of the Related Art

During anomaly detection for machine components, there are problems mostly encountered as follows:

(1) In industrial applications, since most of data that can be collected are generated under normal operations, amounts of normal/abnormal data are uneven.
(2) Due to changes in production factors such as work orders, molds, and materials, a continuous production process may include a variety of working conditions. Thus, there is a certain degree of difficulty for an AI (Artificial Intelligent) model to distinguish between normal and abnormal states under various working conditions.
(3) Training data for a supervised algorithm needs to have a specific label (for example: types of factors causing anomalies). However, in industrial applications, many abnormal factors rarely occur or have never occurred. Using the unsupervised algorithm may have a better adaptability, but there are still unsupervised algorithms incapable of adapting to problems under various working conditions.

When the amounts of normal/abnormal data are uneven, a training performance of the AI model will be poor because there are too few abnormal data available. In addition, because machine components suffered from various working conditions, most algorithms cannot effectively identify actual abnormal conditions.
Therefore, a generative adversarial networks-based method and a device for component anomaly detection are needed to address the above problems.

BRIEF SUMMARY OF THE DISCLOSURE

It is therefore an objective of the present disclosure to provide a generative adversarial networks-based method and device for component anomaly detection.
In an aspect of the present disclosure, a generative adversarial networks-based method for component anomaly detection is provided. The method includes deriving a first abnormal score of input data by a denoising auto-encoder, and deriving a second abnormal score of the input data by a discriminator and adding the first abnormal score to the second abnormal score to calculate an abnormal degree of the input data, wherein the step of deriving the first abnormal score of input data by the denoising auto-encoder includes extracting a manifold coordinate of the input data, and calculating a distance between the manifold coordinate and an average coordinate of normal data as the first abnormal score.
In another aspect of the present disclosure, a device for component anomaly detection is provided. The device comprises a processor and computer storage media coupled to the processor. The computer storage media is configured to store computer-readable instructions for instructing the processor to execute the abovementioned generative adversarial networks-based method.
Based on the Wasserstein Generative Adversarial Network with Gradient Penalty (WGAN-GP), a denoising auto-encoder is used in the disclosure to replace a generator of WGAN-GP and retain a discriminator of WGAN-GP so as to form an AI model architecture. The generative adversarial networks-based method and device for component anomaly detection provided in disclosure have the following advantages:

(1) The denoising auto-encoder can extract the manifold coordinate of the input data. When dimensions of two pieces of the input data are higher and different, a probability that the manifold coordinates of the two pieces of the input data is overlapped is lower, so a degree of discrimination is higher. Therefore, in industrial automation applications, when machine components operate in complex working conditions, the generative adversarial networks-based method and device for component anomaly detection provided in the present disclosure have a high degree of discrimination.

(2) An AI model architecture disclosed in this disclosure uses a denoising auto-encoder and a discriminator to perform inference at the same time, which can improve the discrimination.

BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It should be appreciated that the drawings are not necessarily to scale as some components may be shown out of proportion to their size in actual implementation in order to clearly illustrate the concept of the present disclosure.

FIG. 1 is a schematic diagram of a system for component anomaly detection according to an embodiment of the present disclosure.
FIG. 2 is a schematic diagram of a model training system according to an embodiment of the present disclosure.
FIG. 3 is a schematic diagram of an inference system according to an embodiment of the present disclosure.
FIG. 4 is a flow chart of a method for training an AI model according to an embodiment of the present disclosure.
FIG. 5 is a flow chart illustrating a generative adversarial networks-based method for component anomaly detection according to an embodiment of the present disclosure.
FIG. 6 is a data characteristic coordinate diagram for manifold coordinate according to an embodiment of the present disclosure.
FIG. 7 is a schematic diagram of an electronic device according to an embodiment of the present disclosure.

**DETAILED DESCRIPTION OF THE DISCLOSURE**

The embodiment of the present disclosure provides a generative adversarial networks-based method and device for component anomaly detection. When it is difficult to obtain abnormal data in industrial automation applications, normal training data is used to train an artificial intelligence (AI) model architecture based on a Generative Adversarial Network (GAN) to solve the problem of distinguishing between normal states and abnormal states in various working conditions.

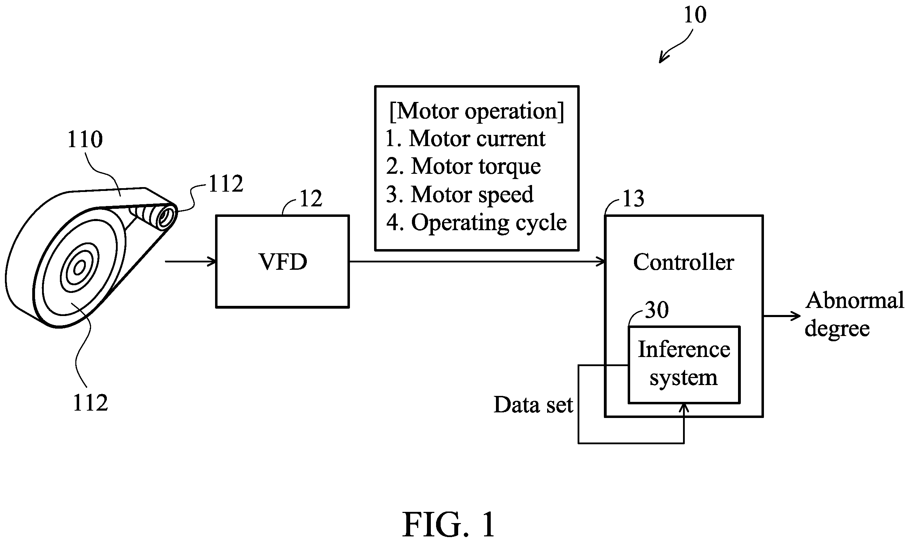

FIG. 1 is a schematic diagram of a system 10 for component anomaly detection according to an embodiment of the present disclosure. The system 10 for component anomaly detection comprises a belt 110, a plurality of driving wheels 112, a variable frequency drive (VFD) 12 and a controller 13, wherein an inference system 30 can be installed in the controller 13.

As shown in FIG. 1, the belt 110 is wound around the plurality of driving wheels 112. The plurality of driving wheels 112 are connected to and controlled by a motor (not shown in FIG. 1), and the motor is connected to and controlled by the variable frequency drive 12. When the motor continues to run and drives the belt 110, the controller 13 collects component parameters (for example, motor operating parameters such as motor current, motor torque, motor speed, and operating cycle) through the variable frequency drive 12 to generate a corresponding data set. The inference system 30 is configured to perform online inference based on inputted real-time data to predict an abnormal degree of the component.

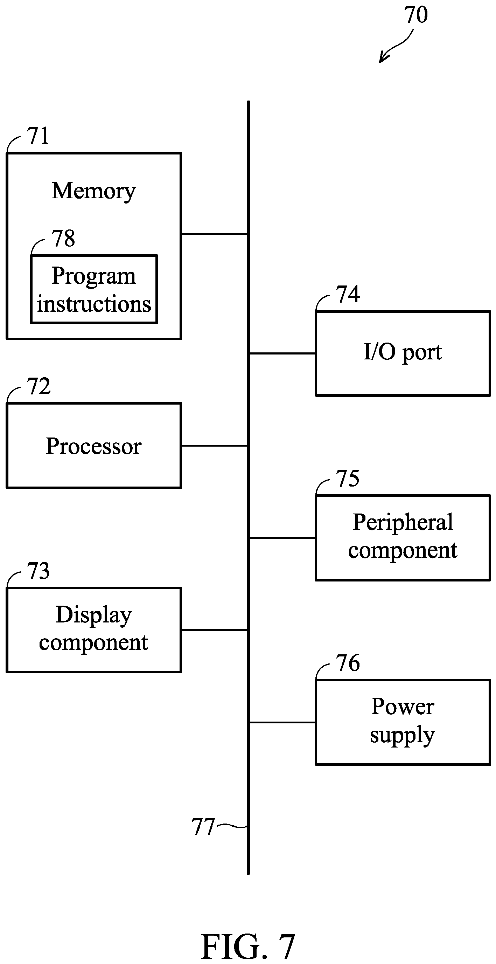

Generally speaking, the inference system 30 must be trained before the inference system 30 can derive the abnormal degree of the component. In this embodiment, the inference system 30 is trained by the controller 13, wherein the inference system 30 receives the component parameters to generate the data set, and performs training based on the data set. In one embodiment, the controller 13 outputs the data set to an external device, the inference system 30 is trained by the external device (such as the electronic device 70 in FIG. 7), and then the external device outputs the trained inference system 30 to the controller 13 for online inference. In another embodiment, the controller 13 outputs the data set to an external device, the inference system 30 is trained by the external device, and online inference is performed in the external device. An advantage of the external device training the inference system 30 is that a higher-performance computer or processor can be used to speed up the training process. The inference system 30 may be stored in the controller 13 or a built-in or external memory of the external device.

In one embodiment, the controller 13 may be, for example, a central processing unit (CPU), a micro control unit (MCU), a System on Chip (SoC) or a programmable Logic controller (PLC), etc., but it should not be limited in the disclosure.

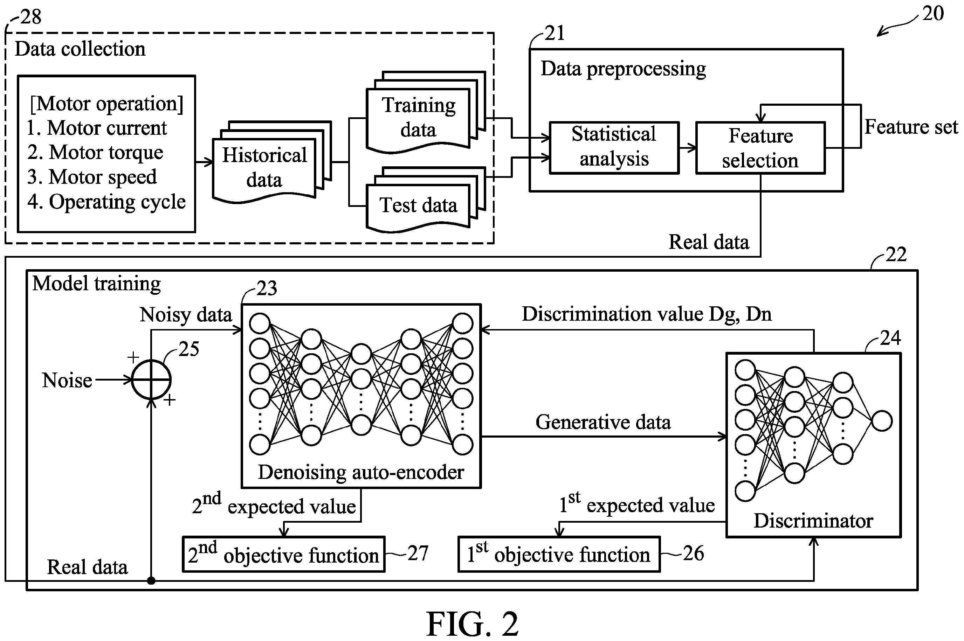

FIG. 2 is a schematic diagram of a model training system 20 according to an embodiment of the present disclosure. The model training system 20 comprises a data collection module 28, a data preprocessing module 21 and a model training module 22. The model training system 20 can be installed in the controller 13 or an external training device (such as the electronic device 70 in FIG. 7).

In the data collection module 28, relevant historical data used to train the model must be collected before the model training. Taking motor operation as an example, a motor current, motor torque, motor speed and operating cycle can be collected as the historical data. In one embodiment, the relevant historical data is numerical data or pictures. A part of the historical data can be used as the training data, while another part can be used as test data.

The data preprocessing module 21 is configured to perform statistical analysis on the training data and the test data to obtain statistical values. Next, the data preprocessing module 21 is configured to select a plurality of influential features from the statistical values to generate a feature set for the subsequent model training and testing. Specifically, when performing the model training and the online inference, the data preprocessing module 21 is configured to delete parameters and data that do not match with the feature set, and retain parameters and data that match with the feature set, so that the data can be used as the input data in the model training module 22 and the inference system 30.

The model training module 22 comprises a denoising auto-encoder (DAE) 23, a discriminator 24, a noise generator 25, a first objective function 26 and a second objective function 27, wherein the denoising auto-encoder 23 and the discriminator 24 conform to a deep neural network (DNN) model architecture.

In operation, the noise generator 25 adds noise to normal data to generate noisy data, and then outputs the noisy data to the denoising auto-encoder 23. The denoising auto-encoder 23 is an initial denoising auto-encoder configured to convert the noisy data into generative data and input the generative data to the discriminator 24.

The discriminator 24 is an initial discriminator and is configured to respectively generate a discrimination value Dg of the generative data and a discrimination value Dn of real data, and feed the discrimination values Dg and Dn back to the denoising auto-encoder 23, wherein the discrimination values Dg and Dn are arbitrary real numbers indicating the degree to which the input data is real. Our experimental results show that a range of the real number falls between 1 and -1. The closer the real number is to 1, the higher the degree to which the input data is regarded as the real data; the closer the real number is to -1, the higher the degree to which the input data is regarded as the generative data. The discriminator 24 calculates a first expected value based on the discriminant values Dg and Dn, and adjusts the parameters so as to maximize an outcome of the first objective function 26. Through multiple trainings, a performance of the discriminator 24 can be gradually optimized. The denoising auto-encoder 23 calculates a second expected value based on the feedback discrimination values Dg and Dn, adjusts the parameters, and then performs the next training so as to maximize an outcome of the second objective function 27. Through multiple trainings, a performance of the denoising auto-encoder 23 can be gradually optimized.

Furthermore, the generative data and the real data (i.e., normal data) are inputted to the discriminator 24 to generate the discrimination values Dg and Dn, and the first and second expected values are calculated, so that the denoising autoencoder 23 and the discriminator 24 adjust parameters according to their respective objective functions, wherein a formula of the first objective function 26 of the discriminator 24 as follows:

$$\max_{D}\left\{\mathbb{E}_{x\sim P_{data}}[D(x)] - \mathbb{E}_{\bar{x}\sim P_{DAE}}[D(\bar{x})] - \lambda\mathbb{E}_{\hat{x}\sim P_{penalty}}[\max(0, \|\nabla_{\hat{x}}D(\hat{x})\| - 1)]\right\}$$

A formula of the second objective function 27 of the denoising auto-encoder 23 is as follows:

$$\min_{DAE}\left\{\mathbb{E}_{x\sim P_{data}}[D(x)] - \mathbb{E}_{\bar{x}\sim P_{DAE}}[D(\bar{x})] + \alpha\|\bar{x} - x\|^2\right\}$$

$P_{data}$ and $P_{DAE}$ are probability distributions of the real data (i.e., normal data) and the generative data, respectively; and $\mathbb{E}_{x\sim P_{data}}$ and $\mathbb{E}_{\bar{x}\sim P_{DAE}}$ are expected values of the real data and the generative data, respectively. A purpose of the first objective function 26 is to maximize a difference between the discrimination values Dg and Dn, which makes the discriminator 24 has a better ability to distinguish between the real data and the generative data; and a purpose of the second objective function 27 is to minimize the difference between the discrimination values Dg and Dn, which makes the generative data closer to the real data such that the discriminator 24 cannot effectively distinguish the former from the later. In addition, by adding a penalty, an often-happened problem that a GAN failed to converge during training can be improved.

Specifically, the discriminator 24 adjusts parameters with reference to the first objective function $\max_D$, so that the discriminator 24 can be gradually optimized after multiple parameter iterations. The denoising auto-encoder 23 adjusts parameters with reference to the second objective function $\min_{DAE}$, so that the denoising auto-encoder 23 can be gradually optimized after multiple parameter iterations. The following steps are continuously repeated for parameter adjustment, and include: (1) with fixed the parameters of the denoising auto-encoder 23, adjusting the parameters of the discriminator 24 until the difference between the discrimination values has been maximized; (2) with fixed the parameters of the discriminator 24, adjusting the parameters of the denoising auto-encoder 23 until the difference between the discrimination values has been minimized.

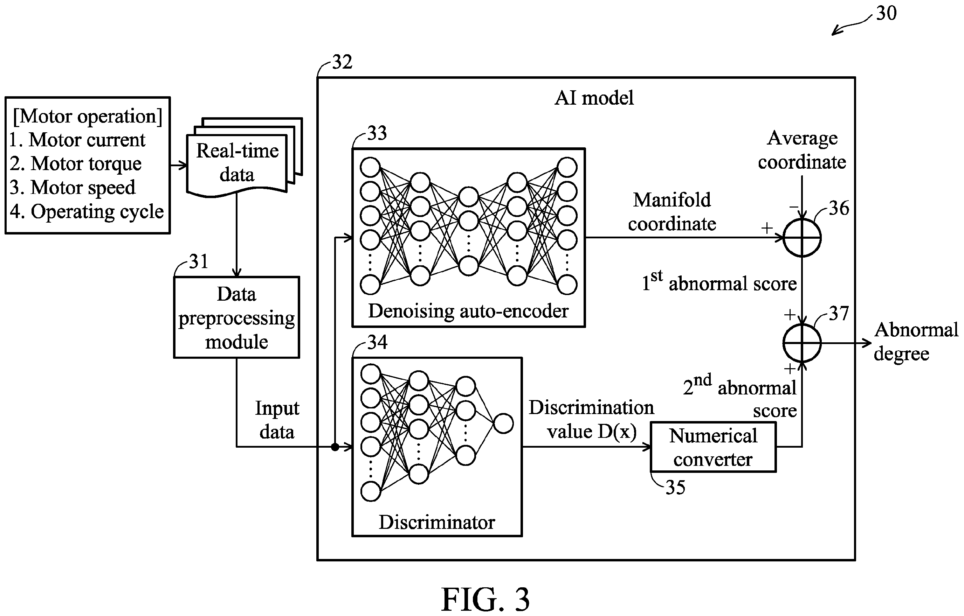

FIG. 3 is a schematic diagram of the inference system 30 according to an embodiment of the present disclosure. The inference system 30 comprises a data preprocessing module 31 and an AI model 32, wherein the AI model 32 comprises a denoising auto-encoder 33, a discriminator 34, a numerical converter 35, a subtractor 36 and an adder 37. The inference system 30 may be installed in the controller 13 or the external detection device (such as the electronic device 70 in FIG. 7).

In operation, the inference system 30 obtains real-time data when the machine components are operating through the controller 13 (as shown in FIG. 1). Taking motor operation as an example, a motor current, motor torque, motor speed and operating cycle can be collected as real-time data. The data preprocessing module 31 preprocesses the real-time data to generate the input data to the denoising auto-encoder 33 and the discriminator 34. The denoising auto-encoder 33 and the discriminator 34 are both trained and derived from the model training system 20 in FIG. 2. The denoising auto-encoder 33 is configured to extract the manifold coordinates of the input data, and then the subtractor 36 calculates a distance between the manifold coordinate and the average coordinate of the normal data as the first abnormal score. In one embodiment, a dimension of the manifold coordinate corresponds to a number of nodes in a hidden layer of the denoising auto-encoder 33. The discriminator 34 derives a discrimination value D(x) of the real-time data, wherein the discrimination value D(x) is an arbitrary real number. The larger the discrimination value D(x) is, the greater the similarity between the input data and the normal data is. The smaller the discrimination value D(x) is, the smaller the similarity between the input data and the normal data is. The discrimination value D(x) can be expressed by the following formula:

$$D(x) = W \times x + b,$$

wherein D(x) represents a determination result of the discriminator 34 on the input data x, W refers to a weight matrix of a last layer of the neural network, and b is a bias value. An effect of the bias value is to introduce an additional parameter into the discriminator 34 so that the discriminator 34 can better fit the input data to improve performance, wherein the bias value b is usually initialized to a smaller constant. The discriminator 34 finally converts the determination result through an activation function and obtains the discrimination value, wherein the activation function can be a linear function.

The value converter 35 is configured to convert the discrimination value D(x) into a second abnormal score. In order to make a magnitude of the discrimination value D(x) intuitively represent the similarity between the input data and the normal data, in one embodiment, the value converter 35 multiplies the discrimination value D(x) by -1 to convert into a second abnormal score. In another embodiment, the value converter 35 subtracts the discrimination value D(x) from a preset value to convert the discrimination value D(x) into the second abnormal score. In another embodiment, when the discrimination value D(x) is greater than zero and less than 1, the value converter 35 takes a reciprocal of the discrimination value D(x) as the second abnormal score. Finally, the adder 37 adds the first abnormal score and the second abnormal score to calculate the abnormal degree of the input data. The larger the value of the abnormal degree, the greater the abnormal degree between the input data and the normal data; conversely, the smaller the value of the abnormal degree, the smaller the abnormal degree between the input data and the normal data.

It should be noted that although the object of anomaly detection in FIG. 1 to 3 is a motor as an example, the present disclosure should not be limited thereto. As an example, the present disclosure can also be applied to a computer numerical control (CNC) milling machine process. A tool condition, feed rate, clamping pressure and other values of a components collected from the CNC machine can be used to determine whether a wear status of the component is normal or abnormal.

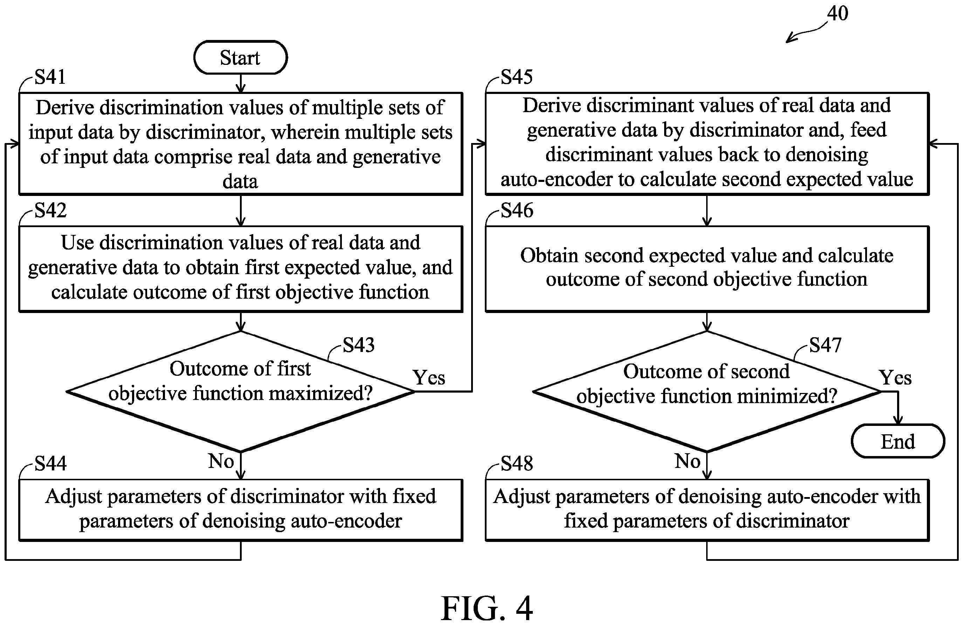

FIG. 4 is a flow chart of a method 40 for training an AI model according to an embodiment of the present disclosure. The method 40 for training the AI model may be executed by the controller 13 in FIG. 1 or the electronic device 70 in FIG. 7 and includes the following steps.

Step S41: Derive discrimination values of multiple sets of input data by the discriminator, wherein the multiple sets of input data comprise real data and generative data.

Step S42: Use the discrimination values of the real data and the generative data to obtain the first expected value, and calculate an outcome of the first objective function.

Step S43: Determine whether the outcome of the first objective function is maximized. When the outcome of the first objective function has been maximized, step S45 is performed. When the outcome of the first objective function has not been maximized, step S44 is performed.

Step S44: Adjust parameters of the discriminator with fixed parameters of the denoising auto-encoder. Return to step S41.

Step S45: Derive the discriminant values of the real data and the generative data by the discriminator, and feed the discriminant values back to the denoising auto-encoder to calculate the second expected value.

Step S46: Obtain the second expected value and calculate an outcome of the second objective function.

Step S47: Determine whether the outcome of the second objective function is minimized. When the outcome of the second objective function has been minimized, the process is ended. When the outcome of the second obj ective function has not been minimized, step S48 is performed.

Step S48: Adjust the parameters of the denoising auto-encoder with fixed parameters of the discriminator. Return to step S45.

Steps S41, S42, S43, S44, and S45 can be executed by the discriminator 24, steps S45, S46, S47, and S48 can be executed by the denoising auto-encoder 23, and steps S42 and S46 can be executed by the first and second objective functions. In one embodiment, after step S48, the controller 13 or the processor may determine whether to return to step S41 to perform the training process again depending on practical situation. By repeatedly executing the method 40 for training the AI model, the performance of the denoising auto-encoder 23 and the discriminator 24 in FIG. 2 can be gradually optimized to apply to the denoising auto-encoder 33 and discriminator 34 in the AI model 32 in FIG. 3.

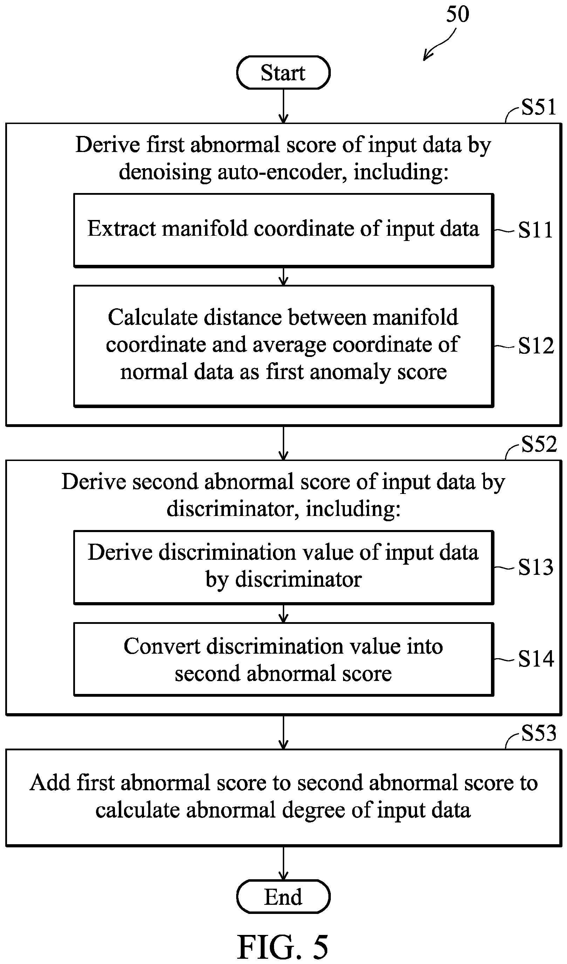

FIG. 5 is a flow chart illustrating a generative adversarial networks-based method 50 for component anomaly detection according to an embodiment of the present disclosure. The method 50 for component anomaly detection can be executed by the controller 13 in FIG. 1 or the electronic device 70 in FIG. 7 and includes the following steps.

Step S51: Derive a first abnormal score of the input data by the denoising auto-encoder. In this embodiment, step S51 includes step S11: extracting a manifold coordinate of the input data; and step S12: calculating a distance between the manifold coordinate and the average coordinate of the normal data as the first anomaly score.

Step S52: Derive a second abnormal score of the input data by a discriminator. In this embodiment, step S52 includes step S13: deriving the discrimination value of the input data by the discriminator; and step S14: converting the discrimination value into the second abnormal score.

Step S53: adding the first abnormal score to the second abnormal score to calculate the abnormal degree of the input data. In one embodiment, when the abnormal degree is higher than a user-defined threshold, the controller 13 or the electronic device 70 in FIG. 7 determines that the input data is abnormal and transmits a warning signal to notify the user.

Steps S51 and S11 can be executed by the denoising auto-encoder 33, step S12 can be executed by the subtractor 36, steps S52 and S13 can be executed by the discriminator 34, step S14 can be executed by the numerical converter 35, and step S53 can be executed by the adder 37.

Before starting the method 50 for component anomaly detection, the real-time data can be obtained through the controller 13, and the real-time data can be preprocessed (including statistical analysis, deletion of unmatched feature set data and retention of matching feature set data), so as to generate the input data. By executing the method 50 for component anomaly detection, the controller 13 or the electronic device 70 in FIG. 7 can perform online inference to generate the abnormal degree of the component, and thereby determine whether the input data is abnormal.

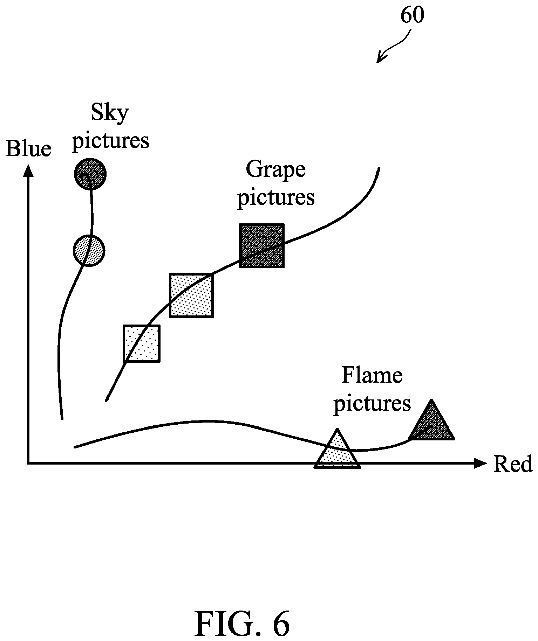

FIG. 6 is a data characteristic coordinate diagram 60 for manifold coordinate according to an embodiment of the present disclosure. The historical data, training data, test data and input data used in the embodiments of the disclosure may be numerical data or pictures. FIG. 6 uses pictures as an example. Different types of pictures respectively clustered in a low-dimensional manifold space in a high-dimensional space, and the manifold coordinates of different types of pictures are almost non-overlapping. In other words, the higher the dissimilarity and the higher the dimensionality, the lower the probability of overlap, so the higher the degree of discrimination.

As mentioned above, in the method for component anomaly detection and the device provided in the disclosure, the denoising auto-encoder and the discriminator are only trained with normal training data, to solve the problem that the amount of abnormal data is too small and the difficulty of distinguishing under various working conditions.

It should be noted that the denoising auto-encoders 23 and 33 and the discriminators 24 and 34 in FIGS. 2 to 3 are configured to be implemented by hardware, software, firmware or any combination thereof. For example, the denoising auto-encoders 23 and 33 and the discriminators 24 and 34 may be implemented as computer program instructions configured to execute in one or more processors. Alternatively, the denoising auto-encoders 23 and 33 and the discriminators 24 and 34 can be implemented by hardware logic/circuitry.

FIG. 7 is a schematic diagram of an electronic device 70 according to an embodiment of the present disclosure.

The disclosure may be realized by means of the computer code or machine-useable instructions, including computer-executable instructions such as program modules, being executed by a computer or other machine, such as a personal data assistant (PDA) or other handheld device. Generally, program modules may include routines, programs, objects, components, data structures, etc., and refer to code that performs particular tasks or implements particular abstract data types. The disclosure may be implemented in a variety of system configurations, including hand-held devices, consumer electronics, general-purpose computers, more specialty computing devices, etc. The disclosure may also be implemented in distributed computing environments where tasks are performed by remote-processing devices that are linked by a communication network.

With reference to FIG. 7, the electronic device 70 may include a bus 77 that is directly or indirectly coupled to the following devices: one or more memories 71, one or more processors 72, one or more display components 73, one or more input/output (I/O) ports 74, one or more peripheral components 75, and an illustrative power supply 76. The bus 77 may represent one or more kinds of busses (such as an address bus, data bus, or any combination thereof).

The memory 71 may include, but not limit to, random access memory (RAM), read-only memory (ROM), electrically-erasable programmable read-only memory (EEPROM), flash memory or other memory technology, compact disc read-only memory (CD-ROM), digital versatile disks (DVD) or other optical disk storage, magnetic cassettes, magnetic tape, magnetic disk storage or other magnetic storage devices, or any other medium which can be used to store the desired information and which can be accessed by the electronic device 70.

The electronic device 70 includes a processor 72 that reads data from various entities such as the memory 71 or the peripheral components 75. The display component(s) 73 present data indications to a user or to another device. For example, the display component(s) 73 can be a display device, speaker, printing component, vibrating component, etc.

The I/O ports 74 allow the electronic device 70 to be logically coupled to other devices including the peripheral components 75, some of which may be embedded. Illustrative components include a microphone, joystick, game pad, satellite dish, scanner, printer, wireless device, etc. The peripheral components 75 may provide an user interface (UI) that processes gestures, voice, or other physiological inputs generated by a user. For example, inputs may be transmitted to an appropriate network element for further processing. A UI may be implemented to realize speech recognition, touch and stylus recognition, facial recognition, biometric recognition, gesture recognition both on screen and adjacent to the screen, air gestures, head and eye tracking, touch recognition associated with displays on the electronic device 70, or any combination thereof. The electronic device 70 may be equipped with depth cameras, such as stereoscopic camera systems, infrared camera systems, RGB camera systems, or any combination thereof, to realize gesture detection and recognition.

Furthermore, the processor 72 in the electronic device 70 can execute the program instructions 78 in the memory 71 to perform the actions and steps or other descriptions herein.

While the disclosure has been described by way of example and in terms of the preferred embodiments, it should be understood that the disclosure is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

**Claims**

1.   A generative adversarial networks-based method (50) for component anomaly detection, comprising:

   (01) / S51: deriving a first abnormal score of input data by a denoising auto-encoder, comprising:

      11); S11: extracting a manifold coordinate of the input data; and
      12); S12: calculating a distance between the manifold coordinate and an average coordinate of normal data as the first abnormal score;

   (02) / S52: deriving a second abnormal score of the input data by a discriminator; and
   (03) / S53: adding the first abnormal score to the second abnormal score to calculate an abnormal degree of the input data.

2.   The generative adversarial networks-based method for component anomaly detection according to claim 1, wherein the step (02) / S52 further comprises:

   (21) deriving a first discrimination value of the input data by the discriminator; and
   (22) converting the first discrimination value into the second abnormal score.

3.   The generative adversarial networks-based method for component anomaly detection according to claim 2, wherein the step (02) / S52 further comprises one of the following steps:

   multiplying the first discrimination value by -1 to obtain the second abnormal score, wherein the first discrimination value is an arbitrary real number;
   subtracting the first discrimination value from a preset value to obtain the second abnormal score; and
   when the first discrimination value is greater than zero and less than 1, taking a reciprocal of the first discrimination value as the second abnormal score.

4.   The generative adversarial networks-based method for component anomaly detection according to one of claims 1-3, wherein before the step (01) / S51, the method further comprises:

   preprocessing real-time data to generate processed data;
   deleting the processed data that does not match with a feature set; and
   retaining the processed data that matches with the feature set as the input data.

5. The generative adversarial networks-based method for component anomaly detection according to one of claims 1-4, wherein before the step (01) / S51, the method further comprises performing a training process (40) and the training process comprises:

(A1) / S41: deriving second discrimination values of multiple sets of input data by an initial discriminator, wherein the multiple sets of input data include at least one real data and at least one generative data;
(A2) / S42: calculating a first expected value based on the second discrimination values by the initial discriminator;
(A3) / S43: inputting the first expected value into a first objective function to determine whether an outcome of the first objective function is maximized;
(A4) / S44: when the outcome of the first objective function has not been maximized, adjusting parameters of the initial discriminator with fixed parameters of an initial denoising auto-encoder according to the first expected value; and
(A5) / S45: repeating the step A1) to the step A4) to train the initial discriminator until the outcome of the first objective function has been maximized, to generate the discriminator.

6. The generative adversarial networks-based method for component anomaly detection according to claim 5, wherein the training process further comprises:

(A6) deriving third discrimination values of the generated data and the at least one real data by the initial discriminator, and feeding the third discrimination values back to the denoising auto-encoder;
(A7) calculating a second expected value based on the third discrimination values by the denoising auto-encoder;
(A8) inputting the second expected value into a second objective function to determine whether an outcome of the second objective function is minimized;
(A9) when the outcome of the second objective function has not been minimized, adjusting the parameters of the initial denoising auto-encoder with fixed parameters of the discriminator and according to the second expected value; and
(A10) repeating the step A6) to the step A9) to train the initial denoising auto-encoder until the outcome of the second objective function has been minimized, to generate the denoising auto-encoder.

7. The generative adversarial networks-based method for component anomaly detection according to claim 5, wherein the step A) further comprises:

adding noise to the normal data to generate noisy data; and
converting the noisy data into the generative data by the initial discriminator, to input the generative data to the discriminator.

8. The generative adversarial networks-based method for component anomaly detection according to claim 5, wherein before the training process, the method further comprises performing a pre-processing process, and the pre-processing process comprises:

(B 1) selecting multiple influential features from statistical values of a training data set through a feature selection method to generate a feature set; and
(B2) selecting data and parameters that match with the feature set as the training data set and providing the training data set to the initial discriminator and the initial denoising auto-encoder during the training process.

9. The generative adversarial networks-based method for component anomaly detection according to one of claims 1-8, further comprising:
determining that the input data is abnormal when the abnormal degree is higher than a user-defined threshold.

10. A device (70) for component anomaly detection, comprising:

a processor (72); and
a computer storage media (71) coupled to the processor, and configured to store computer-readable instructions for instructing the processor to execute the generative adversarial networks-based method (50) described in one of claims 1-9.

10

110

112

112

12

[Motor operation]
1. Motor current
2. Motor torque
3. Motor speed
4. Operating cycle

VFD

13

Controller

30

Inference
system

Abnormal
degree

Data set

FIG. 1

FIG. 2

FIG. 3

EP 4 498 287 A1

EP 4 498 287 A1

40

```
                    ( Start )
                        |
   ┌S41                 |
 ┌──────────────────────────────────┐      ┌S45
 │ Derive discrimination values of  │    ┌────────────────────────────────────┐
 │ multiple sets of input data by   │    │ Derive discriminant values of real │
 │ discriminator, wherein multiple  │───▶│ data and generative data by        │
 │ sets of input data comprise real │    │ discriminator and, feed            │
 │ data and generative data         │    │ discriminant values back to        │
 └──────────────────────────────────┘    │ denoising auto-encoder to          │
              |                           │ calculate second expected value    │
   ┌S42       |                           └────────────────────────────────────┘
 ┌──────────────────────────────────┐                  |
 │ Use discrimination values of     │      ┌S46         |
 │ real data and generative data to │    ┌────────────────────────────────────┐
 │ obtain first expected value, and │    │ Obtain second expected value and   │
 │ calculate outcome of first       │    │ calculate outcome of second        │
 │ objective function               │    │ objective function                 │
 └──────────────────────────────────┘    └────────────────────────────────────┘
              |                                         |
              ▼           ┌S43                          ▼          ┌S47
         ╱ Outcome of   ╲       Yes              ╱ Outcome of    ╲     Yes
        ╱ first objective ╲──────────           ╱ second objective ╲──────────
        ╲ function        ╱                     ╲ function         ╱          |
         ╲ maximized?    ╱                        ╲ minimized?    ╱           ▼
              No|                                       No|              ( End )
   ┌S44       |                           ┌S48          |
 ┌──────────────────────────────────┐    ┌────────────────────────────────────┐
 │ Adjust parameters of             │    │ Adjust parameters of denoising     │
 │ discriminator with fixed         │    │ auto-encoder with fixed            │
 │ parameters of denoising          │    │ parameters of discriminator        │
 │ auto-encoder                     │    │                                    │
 └──────────────────────────────────┘    └────────────────────────────────────┘
```

FIG. 4

50

```
┌─────────┐
│  Start  │
└─────────┘
```

**S51**

Derive first abnormal score of input data by denoising auto-encoder, including:

Extract manifold coordinate of input data — S11

Calculate distance between manifold coordinate and average coordinate of normal data as first anomaly score — S12

**S52**

Derive second abnormal score of input data by discriminator, including:

Derive discrimination value of input data by discriminator — S13

Convert discrimination value into second abnormal score — S14

**S53**

Add first abnormal score to second abnormal score to calculate abnormal degree of input data

```
┌─────────┐
│   End   │
└─────────┘
```

## FIG. 5

FIG. 6

FIG. 7

Europäisches
Patentamt

European
Patent Office

Office européen
des brevets

# EUROPEAN SEARCH REPORT

**Application Number**

EP 24 16 5376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SABOKROU MOHAMMAD ET AL: "Adversarially Learned One-Class Classifier for Novelty Detection", 2018 IEEE/CVF CONFERENCE ON COMPUTER VISION AND PATTERN RECOGNITION, IEEE, 18 June 2018 (2018-06-18), pages 3379-3388, XP033476307, DOI: 10.1109/CVPR.2018.00356 [retrieved on 2018-12-14] * Sections 2 and 3 * | 1-10 | INV. G06N3/09 G06N3/0475 G06N3/0455 G06N3/094 G06N3/045 |
| A | AKCAY SAMET ET AL: "GANomaly: Semi-supervised Anomaly Detection via Adversarial Training", 29 May 2019 (2019-05-29), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 622 - 637, XP047508895, ISBN: 978-3-319-10403-4 [retrieved on 2019-05-29] * the whole document * | 1-10 | |
| A | SCHLEGL THOMAS ET AL: "Unsupervised Anomaly Detection with Generative Adversarial Networks to Guide Marker Discovery", 23 May 2017 (2017-05-23), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 146 - 157, XP047416148, ISBN: 978-3-540-74549-5 [retrieved on 2017-05-23] * the whole document * | 1-10 | |

**TECHNICAL FIELDS SEARCHED (IPC)**

G06N

-/--

The present search report has been drawn up for all claims

| Place of search | Date of completion of the search | Examiner |
|---|---|---|
| The Hague | 10 September 2024 | Jacobs, Jan-Pieter |

Europäisches
Patentamt

European
Patent Office

Office européen
des brevets

**EUROPEAN SEARCH REPORT**

Application Number

EP 24 16 5376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DEEPAK PATHAK ET AL: "Context Encoders: Feature Learning by Inpainting", 2016 IEEE CONFERENCE ON COMPUTER VISION AND PATTERN RECOGNITION (CVPR), 21 November 2016 (2016-11-21), pages 2536-2544, XP055535158, DOI: 10.1109/CVPR.2016.278 ISBN: 978-1-4673-8851-1 * the whole document * ----- | 1-10 | |

TECHNICAL FIELDS
SEARCHED      (IPC)

The present search report has been drawn up for all claims

| Place of search | Date of completion of the search | Examiner |
|---|---|---|
| The Hague | 10 September 2024 | Jacobs, Jan-Pieter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...................................................................................

& : member of the same patent family, corresponding
    document

EPO FORM 1503 03.82 (P04C01)

page 2 of 2

**EP 4 498 287 A1**

## REFERENCES CITED IN THE DESCRIPTION

**Patent documents cited in the description**

- CN 202310916778